# EUROPÄISCHE PATENTANMELDUNG

(11) **EP 3 037 839 A1**
(43) Veröffentlichungstag der Anmeldung: **29.06.2016**
(21) Anmeldenummer: 15003442.9
(22) Anmeldetag: 03.12.2015
(51) Int. Cl.: G01S 5/16, G01S 3/784, G01S 19/14, G01S 13/90, G01S 13/87

(54) **DREHLAGEN-BESTIMMUNG EINES SENSORS MITTELS EINES VON EINEM SATELLITEN AUSGESTRAHLTEN LASERSTRAHLS**

(30) Priorität: 12.12.2014 DE 102014018278
(71) Anmelder: Tesat Spacecom GmbH & Co. KG, 71522 Backnang (DE)
(72) Erfinder: Seel, Stefan, 71540 Murrhardt (DE)
(74) Vertreter: Krebs, Jörg

(57) **Zusammenfassung**

Die Erfindung betrifft das Bestimmen der Drehlage eines Sensors mittels eines von einem Satelliten ausgestrahlten Laserstrahls. Hierfür weist der Sensor (101) eine Drehlagen-Bestimmungseinrichtung (100) auf, die eine Laserstrahl-Erfassungseinrichtung (102) zum Erfassen des vom Satelliten (107) ausgestrahlten Laserstrahls (108) aufweist. Ferner umfasst die Drehlagen-Bestimmungseinrichtung eine Steuereinrichtung (103), die dazu ausgeführt ist, die Drehlage der Drehlagen-Bestimmungseinrichtung basierend auf dem erfassten Laserstrahl (108) zu bestimmen.

## Beschreibung

### Technisches Gebiet

Die Erfindung betrifft die Bestimmung einer Drehlage eines Sensors. Insbesondere betrifft die Erfindung eine Drehlagen-Bestimmungseinrichtung, einen Sensor aufweisend eine Drehlagen-Bestimmungseinrichtung, ein Flugzeug, einen Satelliten und ein Verfahren.

### Technischer Hintergrund

Es gibt viele unterschiedliche Arten von Sensoren, bei denen eine genaue Bestimmung der Drehlage des Sensors bzw. eine genaue Ausrichtung des Sensors erforderlich ist. Beispiele hierfür sind hochauflösende Kamerasensoren von erdnahen Satelliten oder von Beobachtungsflugzeugen bzw. unbemannten Flugzeugen (UAV).

Die Drehlage von Sensoren kann beispielsweise lokal mittels einer mechanischen, elektrischen oder optischen Vorrichtung, wie zum Beispiel einem Kreisel, einem MEMS, einem Faserkreisel oder magneto-hydrodynamischen Sensoren erfolgen. Ferner kann die Drehlagen-Bestimmung des Sensors auch mittels sogenannter Star-Tracker, welche Fixsterne als Bezugsquelle verwenden, bestimmt werden.

### Darstellung der Erfindung

Es ist eine Aufgabe der Erfindung, die Drehlage von Sensoren genauer zu bestimmen und gleichzeitig den dafür erforderlichen technischen Aufwand zu reduzieren.

Diese Aufgabe wird durch die Gegenstände der unabhängigen bzw. nebengeordneten Ansprüche gelöst. Weiterbildungen und Ausführungsformen sind den abhängigen Ansprüchen, der Beschreibung und den Figuren zu entnehmen.

Die Erfindung beruht unter anderem auf der Erkenntnis, dass das Bestimmen der Drehlage eines Sensors, zum Beispiel mit einer µrad-Genauigkeit, mittels einer lokalen Vorrichtung mit einem hohen technischen Aufwand verbunden sein kann. Weiterhin beruht die Erfindung auf der Erkenntnis, dass sogenannte Star-Tracker aufgrund des großen Sichtbereichs (beinahe hemisphärisch) sowie der CCD-Mittelungszeiten, da Fixsterne relativ lichtschwach sind, in der Genauigkeit begrenzt sein können.

Ein erster Aspekt der Erfindung betrifft eine Drehlagen-Bestimmungseinrichtung für einen Sensor, die eine Laserstrahl-Erfassungseinrichtung zum Erfassen eines von einem Satelliten ausgestrahlten Laserstrahls sowie eine Steuereinrichtung umfasst. Die Steuereinrichtung ist dazu ausgeführt, eine Drehlage der Drehlagen-Bestimmungseinrichtung basierend auf dem von der Sensoreinrichtung erfassten Laserstrahl zu bestimmen.

Ein Kerngedanke der Erfindung kann darin gesehen werden, dass ein von einem Satelliten ausgestrahlter Laserstrahl zum Bestimmen der Drehlage bzw. Ausrichtung eines Sensors verwendet wird. Auf diese Weise kann eine sehr hohe Genauigkeit für die Bestimmung der Drehlage erreicht werden, zum Beispiel im µradBereich. Außerdem weist ein von einem Satelliten ausgestrahlter Laserstrahl im Gegensatz zu Fixsternen ein hohes Signal-zu-Rausch-Verhältnis auf, das ungefähr um einen Faktor 100 größer sein kann als bei Fixsternen. Dies bietet den Vorteil, dass die Laserstrahl-Erfassungseinrichtung keine langen Belichtungszeiten bzw. Mittelungszeiten erfordert wie ein Star-Tracker, so dass die Genauigkeit gegenüber Star-Trackern deutlich vergrößert werden kann. Ferner ist auf Seiten des Sensors kein hoher technischer Aufwand für das Erfassen des Laserstrahls erforderlich, so dass die Drehlagen-Bestimmungseinrichtung zuverlässig ist und kostengünstig bereitgestellt werden kann.

Der Sensor kann unterschiedliche Arten von Sensor bezeichnen, bei dem eine präzise Bestimmung der Drehlage und/oder eine präzise Ausrichtung erforderlich ist. Zum Beispiel kann der Sensor eine hochauflösende Kamera eines erdnahen Satelliten oder eines Flugzeugs, insbesondere eines unbemannten Flugzeugs (UAV), sein. Der Sensor kann jedoch beispielsweise auch ein erdgebundenes Teleskop sein. Ferner kann der Sensor auch ein Radarsensor oder eine andere Art von Sensor sein.

Unter der Laserstrahl-Erfassungseinrichtung kann eine Sensoreinheit zum Erfassen optischer und/oder infraroter Laserstrahlung verstanden werden. Ferner kann die Laserstrahl-Erfassungseinrichtung dazu ausgeführt sein, monochromatische Laserstrahlung zu erfassen. Das heißt, dass der Sensor spezifisch ausgelegt sein kann, eine bestimmte Wellenlänge des Lasers zu erfassen. Dadurch, dass ein monochromatischer Sensor verwendet wird, kann der technische Aufwand weiter reduziert und die Genauigkeit erhöht werden.

Der Satellit kann beispielsweise ein geostationärer Satellit sein, d.h. ein Satellit der einen geosynchronen Orbit aufweist. Der Satellit kann jedoch auch einen anderen Orbit aufweisen, z.B. einen Highly Elliptical Orbit (HEO), einen Supersynchronen Orbit, einen Medium Earth Orbit (MEO) oder einen anderen Orbit, bei dem der Satellit eine Entfernung von 1000 km, vorzugsweise 2000 km, zur Erdoberfläche aufweist und seine Position präzise bestimmbar ist. Mit anderen Worten, kann der Satellit kann einen Orbit aufweisen, der geeignet ist, damit der Satellit bzw. der Laser des Satelliten als Bezugspunkt verwendet wird.

Der vom Satelliten ausgestrahlte Laserstrahl kann beispielsweise eine Bündelung aufweisen, die kleiner als 10 µrad ist. Die Wellenlänge des Laserstrahls kann beispielsweise 1550 nm oder von 8864 nm betragen. Es sind jedoch auch andere Wellenlängen möglich, je nachdem welche Art von Laser verwendet wird. Ferner können die Laserstrahl-Erfassungseinrichtung und der Laser des Satelliten genau aufeinander abgestimmt sein, so dass die Laserstrahl-Erfassungseinrichtung dazu ausgeführt ist, die bestimmte Art von Laserstrahlung, die vom Satelliten ausgestrahlt wird, zu erfassen. Durch diese Abstimmung der Laserstrahl-Erfassungseinrichtung und des vom Satelliten ausgestrahlten Laserstrahls kann die Drehlagen-Bestimmungseinrichtung weiter verbessert werden, das heißt die Präzision kann erhöht werden und der technische Aufwand kann verringert werden.

Der Laser des Satelliten kann derart ausgeführt sein, dass der Laserstrahl einen Bereich abdeckt, der ungefähr eine Fläche von 1 km² aufweist. Der Satellit kann ferner dazu ausgeführt sein, den Laser an die geographische Position der Drehlagen-Bestimmungseinrichtung zu richten. Ferner kann der Satellit dazu ausgeführt sein, den Laser einen Bereich um die geographische Position mit dem Laserstrahl abzutasten. Beispielsweise kann der Laser einen Unsicherheitsbereich mit dem Laserstrahl abtasten. Das Abtasten kann z.B. erfolgen, indem der Laserstrahl eine kreisförmige, spiralförmige oder mäanderförmige Abtast-Bewegung durchführt.

Unter der Steuereinrichtung der Drehlagen-Bestimmungseinrichtung kann eine Steuer- und/oder Regelelektronik der Drehlagen-Bestimmungseinrichtung verstanden werden. Mit anderen Worten kann unter der Steuereinrichtung auch ein Regelkreis verstanden werden. Die Drehlage der Drehlagen-Bestimmungseinrichtung kann beispielsweise dadurch bestimmt werden, dass ein oder zwei Winkel zu den Wellenfronten des Laserstrahls bestimmt werden. Beispielsweise kann die Laserstrahl-Erfassungseinrichtung dazu ausgeführt sein, zu bestimmen, mit welchem Winkel bzw. mit welchen Winkeln der Laserstrahl auf die Laserstrahl-Erfassungseinrichtung auftrifft bzw. unter welchem Winkel bzw. unter welchen Winkeln der Laserstrahl von der Laserstrahl-Erfassungseinrichtung aufgenommen wird. Außerdem kann die Steuereinrichtung dazu ausgeführt sein, eine Drehlage des Sensors basierend auf der Drehlage der Bestimmungseinrichtung zu bestimmen. Die Drehlagen-Bestimmungseinrichtung kann beispielsweise dazu ausgeführt sein, fest mit dem Sensor verbunden zu sein, so dass die Drehlage der Drehlagen-Bestimmungseinrichtung gleichzeitig auch die Drehlage des Sensors ist.

Unter der Drehlage kann im Kontext der Erfindung eine Drehlage in einem erdfesten Koordinatensystem, das heißt in einem geographischen Koordinatensystem, verstanden werden. D.h. die Drehlage kann die Drehlage gegenüber der Erdoberfläche sein. Die Drehlage kann beispielsweise durch sogenannte Euler-Winkel ausgedrückt werden.

Die Erfindung kann ferner auch ein Drehlagen-Bestimmungssystem betreffen, welches eine im Kontext beschriebene Drehlagen-Bestimmungseinrichtung sowie den im Kontext der Erfindung beschriebenen Satelliten aufweist.

Gemäß einer weiteren beispielhaften Ausführungsform der Erfindung weist die Drehlagen-Bestimmungseinrichtung weiter eine Positionserfassungseinrichtung zum Erfassen einer geographischen Position des Sensors und eine Sendeeinrichtung zum Übertragen der erfassten geographischen Position des Sensors an den Satelliten auf.

Auf diese Weise kann dem Satelliten die geographische Position des Sensors mitgeteilt werden, so dass der Satellit den Laserstrahl auf die geographische Position des Sensors richten kann.

Die Positionserfassungseinrichtung und die Sendeeinrichtung können in der Drehlagen-Bestimmungseinrichtung integriert sein oder können auch außerhalb der Drehlagen-Bestimmungseinrichtung angeordnet sein. Beispielsweise können die Positionserfassungseinrichtung und die Sendeeinrichtung in einer Bodenstation angeordnet sein. Bei der Positionserfassungseinrichtung kann es sich beispielsweise um ein GPS-System handeln, welches die Position des Sensors erfassen kann. Die Positionserfassungseinrichtung kann jedoch auch eine Eingabevorrichtung bezeichnen, mit welcher die Position des Sensors eingegeben werden kann.

Im Kontext der Erfindung können unter einer geographischen Position geographische Koordinaten bzw. Ortskoordinaten verstanden werden. Unter der geographischen Position des Sensors kann ferner auch ein Flugplan eines Flugzeuges oder eines erdnahen Satelliten verstanden werden. Beispielsweise kann der Flugplan eines erdnahen Satelliten oder eines Flugzeugs, insbesondere eines unbemannten Flugzeugs, auf den Satelliten hochgeladen werden, so dass der Satellit weiß, zu welcher Zeit der Laserstrahl auf welche geographische Position zu richten ist.

Unter der Sendeeinrichtung kann eine Einrichtung zur Kommunikation mit dem Satelliten verstanden werden. Dabei können unterschiedliche Übertragungsarten für die Kommunikation verwendet werden, zum Beispiel Radiowellen oder Laserstrahlen.

Gemäß einer weiteren beispielhaften Ausführungsform der Erfindung weist die Drehlagen-Bestimmungseinrichtung eine Speichereinrichtung auf, in welcher eine Position des Satelliten gespeichert ist. Die Steuereinrichtung ist außerdem dazu ausgeführt, zum Bestimmen der Drehlage der Drehlagen-Bestimmungseinrichtung die gespeicherte Position des Satelliten zu verarbeiten.

Die Position des Satelliten kann beispielsweise einen Azimutalwinkel umfassen. Auf diese Weise kann die Steuereinrichtung durch Vergleichen der geographischen Position der Drehlagen-Bestimmungseinrichtung mit der Position des Satelliten die Neigung bzw. Drehlage der Drehlagen-Bestimmungseinrichtung bestimmen.

Gemäß einer weiteren beispielhaften Ausführungsform der Erfindung ist die Laserstrahl-Erfassungseinrichtung dazu ausgeführt, den Laserstrahl mit einer Genauigkeit von mindestens 10 µrad, vorzugsweise mindestens 5 µrad, noch bevorzugter mindestens 1 µrad, zu erfassen.

Beispielsweise kann die Laserstrahl-Erfassungseinrichtung einen Bildsensor aufweisen, dessen Aufteilung in Sensoruntereinheiten derart ausgelegt ist, dass die Genauigkeit von mindestens 10 µrad, 5 µrad, 1 µrad, erreicht wird. Auf diese Weise kann die Drehlagen-Bestimmungseinrichtung die Drehlage mit der entsprechenden Genauigkeit bzw. Präzision erfassen. Das heißt, dass die Laserstrahl-Erfassungseinrichtung eine Auflösung aufweisen kann, so dass die Richtung des Laserstrahls mit einer Genauigkeit von 10 µrad, 5 µrad, oder 1 µrad bestimmt werden kann.

Gemäß einer weiteren beispielhaften Ausführungsform der Erfindung weist die Laserstrahl-Erfassungseinrichtung einen in eine Mehrzahl von Sensoruntereinheiten unterteilten Bildsensor und eine abbildende Optik zum Fokussieren des erfassten Laserstrahls auf den Bildsensor auf. Dabei ist jede Sensoruntereinheit der Mehrzahl von Sensoruntereinheiten jeweils dazu ausgeführt ist, bei Belichtung durch den fokussierten Laserstrahl ein elektrisches Signal zu erzeugen. Die Steuereinrichtung ist dazu ausgeführt, die Drehlage der Drehlagen-Bestimmungseinrichtung durch Auswerten der elektrischen Signale zu bestimmen.

Unter der abbildenden Optik kann eine Linsenanordnung, eine Spiegelanordnung und/oder ein Objektivsystem verstanden werden, die jeweils dazu ausgelegt sind, den Laserstrahl zu fokussieren. Der Bildsensor kann ferner derart ausgelegt sein, dass er die bestimmte Wellenlänge des vom Satelliten ausgestrahlten Laserstrahls erfassen kann. Beispielsweise kann es sich beim Bildsensor um einen monochromatischen Bildsensor handeln, der nur die Wellenlänge des Laserstrahls erfassen kann. Der Bildsensor kann auch dazu ausgeführt sein, Infrarotstrahlen zu erfassen.

Der Bildsensor kann mit anderen Worten in verschiedene Pixel oder Sektoren aufgeteilt sein. Beispielsweise kann der Bildsensor eine kleine Anzahl von Sensoruntereinheiten, zum Beispiel vier Quadranten, aufweisen. Der Bildsensor kann jedoch auch in eine Vielzahl von Pixel unterteilt sein.

Gemäß einer weiteren beispielhaften Ausführungsform der Erfindung sind die Sensoruntereinheiten Pixel und die Steuereinrichtung ist dazu ausgeführt, die Drehlage der Drehlagen-Bestimmungseinrichtung durch Auswerten, welche Pixel ein elektrisches Signal erzeugen, zu bestimmen.

Gemäß einer weiteren beispielhaften Ausführungsform der Erfindung ist der Bildsensor in vier als Quadranten ausgeführte Sensoruntereinheiten unterteilt. Die Steuereinrichtung ist dazu ausgeführt, die Drehlage der Drehlagen-Bestimmungseinrichtung durch Auswerten Intensitäten der von den Quadranten erzeugten elektrischen Signale zu bestimmen. Das heißt, dass der Bildsensor in exakt vier Quadranten unterteilt sein kann.

Beispielsweise können die Auftreffwinkel des Laserstrahls bestimmt werden, indem die Intensitäten der vier Quadranten zum Beispiel in der Diagonale voneinander subtrahiert werden.

Ein weiterer Aspekt der Erfindung betrifft einen Sensor aufweisend eine im Kontext der Erfindung beschriebenen Drehlagen-Bestimmungseinrichtung.

Die Steuereinrichtung der Drehlagen-Bestimmungseinrichtung kann in diesem Fall dazu ausgeführt sein, eine Drehlage des Sensors basierend auf dem von der Sensoreinrichtung erfassten Laserstrahl zu bestimmen.

Ferner kann der Sensor auch Merkmale aufweisen, die im Kontext der Drehlagen-Bestimmungseinrichtung beschrieben sind.

Gemäß einer weiteren beispielhaften Ausführungsform der Erfindung ist die Steuereinrichtung dazu ausgeführt, den Sensor basierend auf der bestimmten Drehlage auszurichten.

Beispielsweise kann eine bestimmte Ausrichtung des Sensors vorgegeben sein, so dass die Steuereinrichtung den Sensor ausgehend von der bestimmten Drehlage derart ausrichten kann, dass die vorgegebene Ausrichtung erreicht wird.

Gemäß einer weiteren beispielhaften Ausführungsform der Erfindung ist der Sensor eine optische Kamera, eine Infrarotkamera, ein Radarsensor und/oder ein Radar mit synthetischer Apertur. Bei der Kamera kann es sich insbesondere um eine hochauflösende Kamera eines Flugzeugs bzw. eines erdnahen Satelliten handeln.

Ein weiterer Aspekt der Erfindung betrifft ein Sensorsystem aufweisend einen ersten im Kontext der Erfindung beschriebenen Sensor und einen zweiten im Kontext der Erfindung beschriebenen Sensor. Dabei sind die Steuereinrichtungen der Drehlagen-Bestimmungseinrichtungen des ersten Sensors und des zweiten Sensors dazu ausgeführt, den ersten Sensor und den zweiten Sensor gemeinsam auszurichten.

Beispielsweise können der erste Sensor und der zweite Sensor auf einem erdnahen Satelliten oder an einem Flugzeug angeordnet sein. Der erste Sensor und der zweite Sensor können dazu ausgeführt sein, denselben Punkt bzw. Bereich auf der Erdoberfläche mit unterschiedlichen Wellenlängen zu untersuchen bzw. Strahlung von diesem Bereich mit unterschiedlichen Wellenlängen zu erfassen. Mittels des beschriebenen Systems können der erste Sensor und der zweite Sensor sehr genau auf denselben Bereich auf der Erdoberfläche ausgerichtet werden. Die Steuereinrichtungen der Drehlagen-Bestimmungseinrichtungen des ersten Sensors und des zweiten Sensors können ferner in einer zentralen Steuereinrichtung des Sensorsystems integriert sein, welche dazu ausgeführt ist, den ersten Sensor und den zweiten Sensor gemeinsam auszurichten.

Der erste Sensor und der zweite Sensor können beispielsweise auch an zwei unterschiedlichen Flugzeugen, Satelliten oder Teleskopen angebracht sein, so dass die zwei unterschiedlichen Flugzeuge, Satelliten bzw. Teleskope bzw. deren Sensoren gemeinsam ausgerichtet werden können.

Ein weiterer Aspekt der Erfindung betrifft ein Flugzeug oder einen erdnahen Satelliten, welches oder welcher einen im Kontext der Erfindung beschriebenen Sensor oder ein im Kontext der Erfindung beschriebenes Sensorsystem aufweist.

Beim Flugzeug kann es sich beispielsweise um ein Beobachtungsflugzeug und/oder um ein unbemanntes Flugzeug (UAV) handeln.

Ein weiterer Aspekt der Erfindung betrifft ein Verfahren zum Ausrichten eines Sensors, welches den Schritt des Erfassens eines von einem Satelliten ausgestrahlten Laserstrahls mittels einer Drehlagen-Bestimmungseinrichtung und den Schritt des Bestimmens der Drehlage des Sensors basierend auf dem erfassten Laserstrahl aufweist.

Die Schritte des Verfahrens können ferner auch durch Merkmale charakterisiert sein, die im Kontext der Drehlagen-Bestimmungseinrichtung, des Sensors, des Sensorsystems oder des Flugzeugs bzw. Satelliten beschrieben sind. Außerdem können die Schritte in der angegebenen Reihenfolge, in einer anderen Reihenfolge oder parallel zueinander durchgeführt werden.

Gemäß einer beispielhaften Ausführungsform der Erfindung umfasst das Verfahren ferner die Schritte des Erfassens einer geographischen Position der Drehlagen-Bestimmungseinrichtung und des Übertragens der erfassten Position der Drehlagen-Bestimmungseinrichtung an den Satelliten.

Gemäß einer weiteren beispielhaften Ausführungsform der Erfindung umfasst das Verfahren ferner den Schritt des Verarbeitens einer Position des Satelliten zum Bestimmen der Drehlage des Sensors.

Weitere Merkmale, Vorteile und Anwendungsmöglichkeiten der Erfindung ergeben sich aus der nachfolgenden Beschreibung der Ausführungsbeispiele und Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.

### Kurze Beschreibung der Figuren

Fig. 1 zeigt einen Sensor mit einer Drehlagen-Bestimmungseinrichtung gemäß einem Ausführungsbeispiel der Erfindung.
Fig. 2A zeigt eine Laserstrahl-Erfassungseinrichtung einer Drehlagen-Bestimmungseinrichtung gemäß einem Ausführungsbeispiel der Erfindung.
Fig. 2B und 2C zeigen jeweils einen Bildsensor gemäß einem Ausführungsbeispiel der Erfindung.
Fig. 3 zeigt zwei unbemannte Flugzeuge, die einen Sensor und eine Drehlagen-Bestimmungseinrichtung gemäß einem Ausführungsbeispiel der Erfindung aufweisen.
Fig. 4 zeigt ein unbemanntes Flugzeug mit zwei Sensoren, die jeweils eine Drehlagen-Bestimmungseinrichtung gemäß einem Ausführungsbeispiel der Erfindung aufweisen.
Fig. 5 zeigt ein Teleskop mit einer Drehlagen-Bestimmungseinrichtung gemäß einem Ausführungsbeispiel der Erfindung.
Fig. 6 zeigt ein Flussdiagramm für ein Verfahren gemäß einem Ausführungsbeispiel der Erfindung.
Fig. 7 zeigt ein Flussdiagramm für ein Verfahren gemäß einem Ausführungsbeispiel der Erfindung.

Die Figuren sind dabei schematisch und nicht maßstabsgetreu dargestellt. Sind in der nachfolgenden Beschreibung im Kontext von verschiedenen Figuren die gleichen Bezugszeichen angegeben, so bezeichnen diese gleiche oder ähnliche Elemente. Gleiche oder ähnliche Elemente können aber auch mit unterschiedlichen Bezugszeichen bezeichnet sein.

### Detaillierte Beschreibung von Ausführungsbeispielen

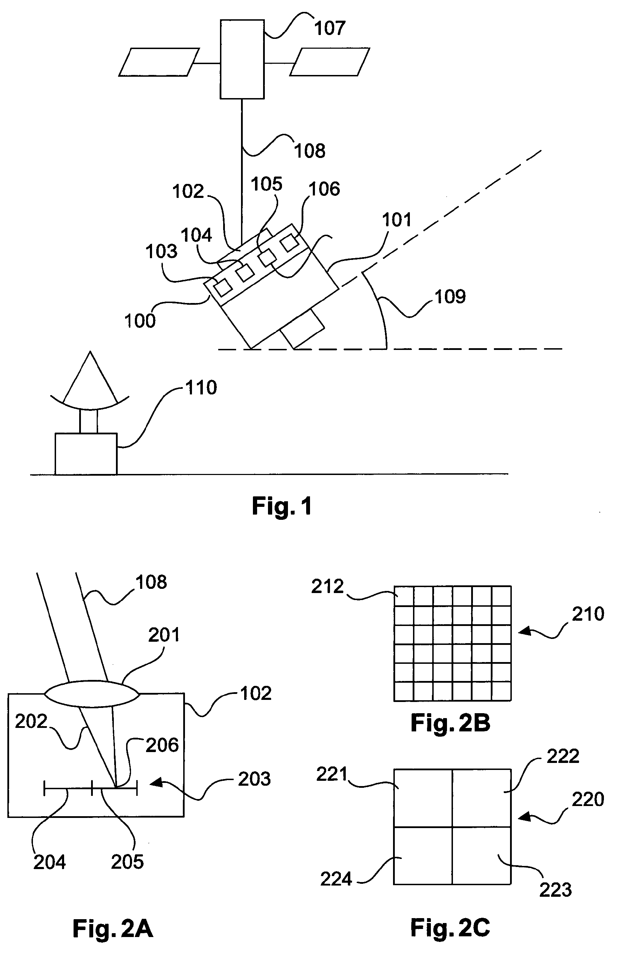

In Fig. 1 ist ein Sensor 101 mit einer Drehlagen-Bestimmungseinrichtung 100 gemäß einem Ausführungsbeispiel der Erfindung dargestellt. Die Drehlagen-Bestimmungseinrichtung 100 umfasst eine Laserstrahl-Erfassungseinrichtung 102 zum Erfassen eines Laserstrahls 108, der von einem Satelliten 107 ausgestrahlt wird. Ferner umfasst die Drehlagen-Bestimmungseinrichtung 100 eine Steuereinrichtung 103, die dazu ausgeführt ist, die Drehlage der Drehlagen-Bestimmungseinrichtung 100 und somit auch des Sensors 101 basierend auf dem von der Sensoreinrichtung erfassten Laserstrahl zu bestimmen. Ferner umfasst die Drehlagen-Bestimmungseinrichtung 100 eine Positionserfassungseinrichtung 104 zum Erfassen einer geographischen Position des Sensors 101, eine Sendeeinrichtung 105 zum Übertragen der erfassten geographischen Position des Sensors 101 an den Satelliten 107 sowie eine Speichereinrichtung 106, in der eine Position des Satelliten 107 gespeichert ist.

Der Sensor 101 kann beispielsweise eine hochauflösende Kamera sein, die an einem erdnahen Satelliten oder an einem Flugzeug angebracht ist. Bei der Drehlage der Drehlagen-Bestimmungseinrichtung bzw. des Sensors kann es sich um den Neigungswinkel 109 der Drehlagen-Bestimmungseinrichtung bzw. des Sensors handeln. Ferner kann es sich auch um zwei Neigungswinkel 109 gegenüber einer durch Erdkoordinaten definierten Ebene bzw. Kugeloberfläche handeln.

Die Positionserfassungseinrichtung 104 und die Sendeeinrichtung können wie dargestellt in der Drehlagen-Bestimmungseinrichtung 100 integriert sein. Alternativ können die Positionserfassungseinrichtung 104 und die Sendeeinrichtung auch in einer Bodenstation 110 integriert sein.

Beispielsweise kann der Sensor an einem erdnahen Satelliten angebracht sein. In diesem Fall kann die Bodenstation 110 eine Position und/oder einen Flugplan des erdnahen Satelliten an den Satelliten 107 übertragen. Weiterhin ist die Positionserfassungseinrichtung eine Einrichtung der Bodenstation 110 zum Festlegen des Flugplans des erdnahen Satelliten und die Sendeeinrichtung ist eine Kommunikationseinrichtung der Bodenstation zum Übertragen von Daten an den Satelliten 107.

Im Falle, dass die Sendeeinrichtung 104 in der Drehlagen-Bestimmungseinrichtung 100 integriert ist bzw. am erdnahen Satelliten oder am Flugzeug angeordnet ist, kann die Sendeeinrichtung die Position des Sensors 101 entweder direkt an den Satelliten 107 übertragen oder die Position des Sensors 101 über die Bodenstation 110 an den Satelliten 107 übertragen.

In Fig. 2A ist eine Laserstrahl-Erfassungseinrichtung 102 gemäß einem Ausführungsbeispiel der Erfindung dargestellt. Die Laserstrahl-Erfassungseinrichtung 102 umfasst einen Bildsensor 203, der in eine Mehrzahl von Sensoruntereinheiten 204, 205 unterteilt ist. Dieser Bildsensor ist beispielsweise ein monochromatischer CCD-Sensor, der dazu ausgelegt ist, die vom Satelliten ausgestrahlte Laserstrahlung 108 zu erfassen. Die Laserstrahl-Erfassungseinrichtung umfasst ferner eine abbildende Optik 201, z.B. eine Linse, zum Fokussieren des erfassten Laserstrahls 108, 202 auf dem Bildsensor 203. Mit anderen Worten erzeugt die abbildende Optik 201 aus dem Laserstrahl 108 einen fokussierten Strahl 202, der an einem bestimmten Punkt bzw. Bereich 206 auf dem Bildsensor 203 auftrifft.

Die Steuereinrichtung der Drehlagen-Bestimmungseinrichtung kann anhand dessen, welche Sensoruntereinheit 204, 205 des Bildsensors 203 zum Laserstrahl 108 gerichtet wird, den oder die Winkel ableiten, mit dem bzw. denen der Laserstrahl 108 auf die Laserstrahl-Erfassungseinrichtung auftrifft bzw. einstrahlt. Basierend auf diesem bzw. diesen Auftreffwinkel bzw. Einstrahlwinkel des Laserstrahls 108 kann die Steuereinrichtung wiederum die Drehlage der Drehlagen-Bestimmungseinrichtung bzw. des Sensors bestimmen.

In Fig. 2B ist ein Bildsensor 210 einer Laserstrahl-Erfassungseinrichtung gemäß einem Ausführungsbeispiel der Erfindung dargestellt. Der Bildsensor 210 umfasst eine Mehrzahl von Pixeln 212. Der Auftreffwinkel bzw. Einstrahlwinkel des Laserstrahls 108 kann dadurch bestimmt werden, indem ermittelt wird, welche Pixel 212 vom Laserstrahl belichtet werden bzw. elektrische Signale erzeugen.

In Fig. 2C ist ein Bildsensor 220 einer Laserstrahl-Erfassungseinrichtung gemäß einem Ausführungsbeispiel der Erfindung dargestellt, der in vier Quadranten 221, 222, 223 und 224 unterteilt ist. Der Auftreffwinkel bzw. Einstrahlwinkel des Laserstrahls 108 kann in diesem Fall dadurch bestimmt werden, indem die Intensitäten der einzelnen Quadranten 221 bis 224 voneinander subtrahiert werden. Beispielsweise können die Intensitäten über die Diagonale voneinander subtrahiert werden, das heißt, dass die Intensität vom Quadranten 221 von der Intensität des Quadranten 223 subtrahiert wird und dass die Intensität des Quadranten 222 von der Intensität des Quadranten 224 subtrahiert wird. Es sind jedoch auch andere Subtraktionsschemen möglich.

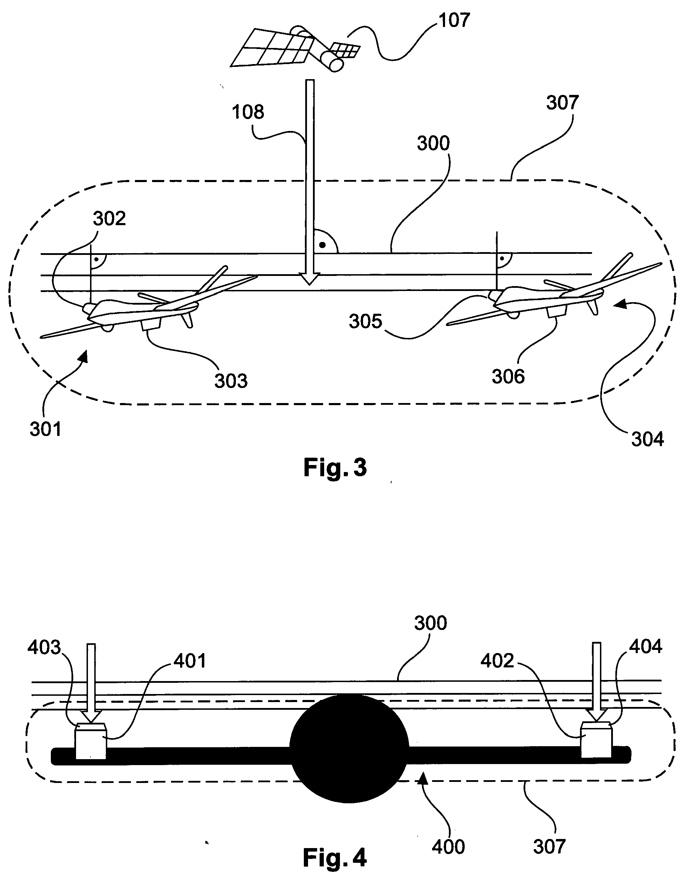

In Fig. 3 sind zwei unbemannte Flugzeuge 301 und 304 dargestellt, die jeweils einen Sensor 303 und 306 sowie eine Drehlagen-Bestimmungseinrichtung 302 und 305 gemäß einem Ausführungsbeispiel der Erfindung aufweisen. Außerdem ist ein Satellit 107 dargestellt, der einen Laserstrahl 108 ausstrahlt. Anhand dieses Laserstrahls 108 bzw. anhand der Wellenfronten 300 des Laserstrahls können die Drehlagen-Bestimmungseinrichtungen 302 und 305 jeweils die Drehlage bestimmen.

Beispielsweise können der erste Sensor 303 des ersten unbemannten Flugzeugs 301 und der zweite Sensor 306 des zweiten unbemannten Flugzeugs 304 dazu ausgeführt sein, denselben Punkt bzw. dasselbe Gebiet der Erdoberfläche zu erfassen. Um auf diesen selben Punkt bzw. Bereich ausgerichtet zu werden, wird die Drehlage der jeweiligen Sensoren 303 und 306 anhand des Lasers 108 bzw. dessen Wellenfronten 300 exakt bestimmt. Beispielsweise kann der erste Sensor 303 eine hochauflösende optische oder Infrarotkamera sein, wohingegen der zweite Sensor 306 ein Radar mit synthetischer Apertur sein kann. Ein weiteres Beispiel ist, dass der erste Sensor 303 ein Radarsender zum Aussenden von Radarstrahlen und der zweite Sensor 306 ein Radarempfänger zum Empfangen der Reflexionen der ausgestrahlten Radarstrahlen ist. Mit anderen Worten bilden der erste Sensor 303 und der zweite Sensor 306 ein Sensorsystem 307.

In Fig. 4 ist ein unbemanntes Flugzeug 400 gemäß einem Ausführungsbeispiel der Erfindung dargestellt, welches ein Sensorsystem 307 aufweist. Das Sensorsystem 307 umfasst einen ersten Sensor 401 mit einer ersten Drehlagen-Bestimmungseinrichtung 403 und einen zweiten Sensor 402 mit einer zweiten Drehlagen-Bestimmungseinrichtung 404. Dabei sind die erste Drehlagen-Bestimmungseinrichtung 403 und die zweite Drehlagen-Bestimmungseinrichtung 404 dazu ausgeführt, die jeweilige Drehlage basierend auf dem vom Satelliten ausgestrahlten Laserstrahl bzw. dessen Wellenfronten zu bestimmen. Wie oben beschrieben, können der erste Sensor und der zweite Sensor unterschiedliche Sensoren sein, zum Beispiel eine hochauflösende Kamera und ein Radarsensor, die denselben Punkt auf der Erdoberfläche erfassen.

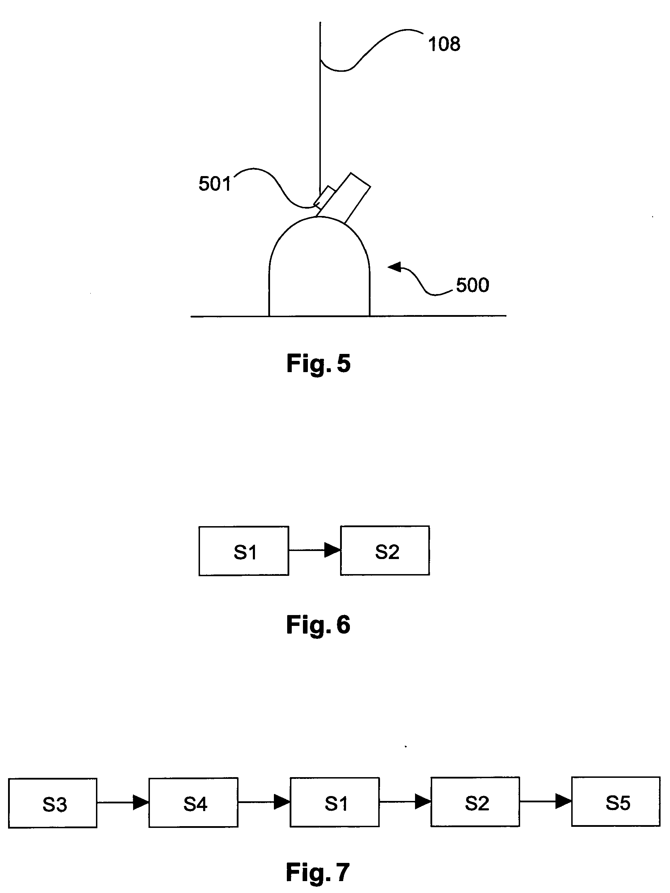

In Fig. 5 ist ein Teleskop 500 dargestellt, welches eine Drehlagen-Bestimmungseinrichtung 501 gemäß einem Ausführungsbeispiel der Erfindung aufweist. Anhand der Drehlagen-Bestimmungseinrichtung 501 kann das Teleskop 500 mittels des vom Satelliten ausgestrahlten Laserstrahls 108 präzise ausgerichtet werden.

In Fig. 6 ist ein Flussdiagramm für ein Verfahren zum Ausrichten eines Sensors gemäß einem Ausführungsbeispiel der Erfindung dargestellt. Das Verfahren umfasst den Schritt S1 des Erfassens eines von einem Satelliten ausgestrahlten Laserstrahls mittels einer Drehlagen-Bestimmungseinrichtung und den Schritt S2 des Bestimmens der Drehlage des Sensors basierend auf dem erfassten Laserstrahl.

In Fig. 7 ist ein Flussdiagramm für ein weiteres Verfahren zum Ausrichten eines Sensors gemäß einem Ausführungsbeispiel der Erfindung dargestellt. Das Verfahren umfasst den Schritt S3 des Erfassens einer geographischen Position der Drehlagen-Bestimmungseinrichtung, den Schritt S4 des Übertragens der erfassten Position der Drehlagen-Bestimmungseinrichtung an den Satelliten, den Schritt S1 des Erfassens eines von einem Satelliten ausgestrahlten Laserstrahls mittels einer Drehlagen-Bestimmungseinrichtung, den Schritt S2 des Bestimmens der Drehlage des Sensors basierend auf dem erfassten Laserstrahl sowie den Schritt S5 des Verarbeitens einer Position des Satelliten zum Bestimmen der Drehlage des Sensors.

Ergänzend sei darauf hinzuweisen, dass "umfassend" oder "aufweisend" keine anderen Elemente ausschließt und "ein" oder "einer" keine Vielzahl ausschließt. Ferner sei darauf hingewiesen, dass Merkmale, die mit Verweis auf eines der obigen Ausführungsbeispiele oder Ausführungsformen beschrieben worden sind, auch in Kombination mit anderen Merkmalen anderer oben beschriebener Ausführungsbeispiele oder Ausführungsformen verwendet werden können. Bezugszeichen in den Ansprüchen sind nicht als Einschränkungen anzusehen.

## Patentansprüche

1. Drehlagen-Bestimmungseinrichtung (100) für einen Sensor (101), aufweisend:
eine Laserstrahl-Erfassungseinrichtung (102) zum Erfassen eines von einem Satelliten (107) ausgestrahlten Laserstrahls (102);
eine Steuereinrichtung (103);
wobei die Steuereinrichtung dazu ausgeführt ist, eine Drehlage (109) der Drehlagen-Bestimmungseinrichtung basierend auf dem von der Sensoreinrichtung erfassten Laserstrahl zu bestimmen.

2. Drehlagen-Bestimmungseinrichtung (100) nach Anspruch 1, weiter aufweisend:
eine Positionserfassungseinrichtung (104) zum Erfassen einer geographischen Position des Sensors; und
eine Sendeeinrichtung (105) zum Übertragen der erfassten geographischen Position des Sensors an den Satelliten.

3. Drehlagen-Bestimmungseinrichtung (100) nach Anspruch 1 oder 2, weiter aufweisend:
eine Speichereinrichtung (106), in der eine Position des Satelliten (107) gespeichert ist;
wobei die Steuereinrichtung (103) dazu ausgeführt ist, zum Bestimmen der Drehlage der Drehlagen-Bestimmungseinrichtung die gespeicherte Position des Satelliten zu verarbeiten.

4. Drehlagen-Bestimmungseinrichtung (100) nach einem der Ansprüche 1 bis 3,
wobei die Laserstrahl-Erfassungseinrichtung (102) dazu ausgeführt ist, den Laserstrahl mit einer Genauigkeit von mindestens 10 µrad zu erfassen.

5. Drehlagen-Bestimmungseinrichtung (100) nach einem der vorangehenden Ansprüche, die Laserstrahl-Erfassungseinrichtung (102) aufweisend:
einen in eine Mehrzahl von Sensoruntereinheiten (204, 205) unterteilten Bildsensor (203);
eine abbildende Optik (201) zum Fokussieren des erfassten Laserstrahls (108, 202) auf den Bildsensor;
wobei jede Sensoruntereinheit der Mehrzahl von Sensoruntereinheiten jeweils dazu ausgeführt ist, bei Belichtung durch den fokussierten Laserstrahl ein elektrisches Signal zu erzeugen; und
wobei die Steuereinrichtung dazu ausgeführt ist, die Drehlage der Drehlagen-Bestimmungseinrichtung durch Auswerten der elektrischen Signale zu bestimmen.

6. Drehlagen-Bestimmungseinrichtung (100) nach Anspruch 5,
wobei die Sensoruntereinheiten Pixel (212) sind; und
wobei die Steuereinrichtung dazu ausgeführt ist, die Drehlage der Drehlagen-Bestimmungseinrichtung durch Auswerten, welche Pixel ein elektrisches Signal erzeugen, zu bestimmen.

7. Drehlagen-Bestimmungseinrichtung (100) nach Anspruch 5,
wobei der Bildsensor in vier als Quadranten ausgeführte Sensoruntereinheiten (221, 222, 223, 224) unterteilt ist; und
wobei die Steuereinrichtung dazu ausgeführt ist, die Drehlage der Drehlagen-Bestimmungseinrichtung durch Auswerten der Intensitäten der von den Quadranten erzeugten Signale zu bestimmen.

8. Sensor (101), aufweisend die Drehlagen-Bestimmungseinrichtung (100) nach einem der vorangehenden Ansprüche.

9. Sensor (101) nach Anspruch 8,
wobei die Steuereinrichtung dazu ausgeführt ist, den Sensor basierend auf der bestimmten Drehlage auszurichten.

10. Sensor (101) nach Anspruch 8 oder 9,
wobei der Sensor eine optische Kamera, eine Infrarotkamera, ein Radarsensor und/oder ein Radar mit synthetischer Apertur ist.

11. Sensor-System (307), aufweisend:
einen ersten Sensor nach einem der Ansprüche 8 bis 10;
einen zweiten Sensor nach einem der Ansprüche 8 bis 10;
wobei die Steuereinrichtungen der Drehlagen-Bestimmungseinrichtungen des ersten Sensors und des zweiten Sensors dazu ausgeführt sind, den ersten Sensor und den zweiten Sensor gemeinsam auszurichten.

12. Flugzeug (301) oder Satellit, aufweisend einen Sensor nach einem der Ansprüche 8 bis 10 oder aufweisend ein Sensor-System nach Anspruch 11.

13. Verfahren zum Ausrichten eines Sensors, das Verfahren aufweisend die Schritte:
Erfassen eines von einem Satelliten ausgestrahlten Laserstrahls mittels einer Drehlagen-Bestimmungseinrichtung (S1); und
Bestimmen der Drehlage des Sensors basierend auf dem erfassten Laserstrahl (S2).

14. Verfahren nach Anspruch 13, weiter aufweisend die Schritte:
Erfassen einer geographischen Position der Drehlagen-Bestimmungseinrichtung (S3); und
Übertragen der erfassten Position der Drehlagen-Bestimmungseinrichtung an den Satelliten (S4).

15. Verfahren nach Anspruch 13 oder 14, weiter aufweisend den Schritt:
Verarbeiten einer Position des Satelliten zum Bestimmen der Drehlage des Sensors (S5).
